# EUROPEAN PATENT SPECIFICATION

(11) **EP 3 626 461 B1**
(45) Date of publication and mention of the grant of the patent: **17.03.2021**
(21) Application number: 19193604.6
(22) Date of filing: 26.08.2019
(51) Int. Cl.: B41J 2/165, F16J 15/00, F16J 15/06

(54) **SEALED CLOSURE FOR A DEVICE FOR CLEANING PRINTING HEADS**
ABGEDICHTETER VERSCHLUSS FÜR EINE VORRICHTUNG ZUM REINIGEN VON DRUCKKÖPFEN
FERMETURE ÉTANCHE POUR DISPOSITIF DE NETTOYAGE DE TÊTES D'IMPRESSION

(30) Priority: 18.09.2018 ES 201830898
(43) Date of publication of application: 25.03.2020
(73) Proprietor: Personas y Tecnología, S.L., 12200 Onda (Castellón) (ES)
(72) Inventor: GAYA FUENTES, Francisco Javier, 12200 ONDA (Castellón de la Plana) (ES)
(74) Representative: Ungria López, Javier

(56) References cited:
- US-A1- 2003 058 301

## Description

### OBJECT OF THE INVENTION

The present invention, as indicated by the title itself, consists of a sealed closure for a device for cleaning inkjet printing heads, which consists of retaining and adjusting said head in an airtight manner to a machine for cleaning heads on the lateral surface surrounding the face of the jets, such that said head is secured by the area that can withstand the pressure necessary for the cleaning process by means of a solvent liquid.

Therefore, the present invention aims to prevent flaws or damage created in the heads as they are cleaned by cleaning processes with the retention systems present on the market. The invention falls within the technical field of the industry of machines or mechanisms for selective printing characterised by the printing or marking method for which they are conceived.

### BACKGROUND OF THE INVENTION

In recent years, devices intended for cleaning ink printing heads have been developed which provide a better solution than merely injecting liquid solvent by means of a syringe or other pressurised system directly onto the printing head once it has been disconnected from the ink inlet tubes. This is due to the fact that these types of cleanings have serious drawbacks for cleaning serious and complex blockages caused by the ink drying inside the heads.

One of these devices is summarised in WO2014122336 A1, which describes a device and method for cleaning inkjet printing heads which has a main basin wherein an ink printing head is housed for the cleaning thereof, such that a lower portion of the printing head is continuously immersed in a liquid solvent, while an ultrasound device breaks the dirt particles obstructing the inner spaces of the head.

This cleaning system is very effective with most of the heads on the market, nevertheless, with certain models problems arise when trying to create a fluid-tight sealed closure between the ink printing head and the passage device. This is due to the fact that, in order to achieve the necessary airtightness to prevent the cleaning fluid from going to portions of the cartridge that can deteriorate, the printing head must be vertically pressed on the surface wherein the nozzles or injection holes for the cleaning liquid are located, being able to deteriorate internal portions of said head, leaving it unusable.

Furthermore, since the airtight seal configured in WO2014122336 A1 comprises a perimeter lip which protrudes above the base of the device whereon the printing head rests, the force between said printing head and the passage device during the cleaning causes the perimeter lip to bend towards the inner space favouring airtightness but, sometimes, causing the aforementioned deterioration of the internal portions in the heads.

US 2003058301 A1 discloses relevant prior art.

### DESCRIPTION OF THE INVENTION

The invention is defined by a sealed closure according to claim 1.

In the present description, in order to solve the existing problems mentioned above, a new seal or sealed closure is defined for cleaning devices for inkjet printing heads by means of a cleaning liquid, which retains the printing heads by means of tightening on the lateral surface surrounding the face of the jets, such that said head is secured by the area that can withstand the necessary pressure created in the cleaning process, without deteriorating the internal parts of the heads and without the heads damaging the components of the sealed closure.

Once the sealed closure is ensured, the operation of the device consists of making the cleaning fluid, preferably some type of solvent, pass over the printing heads, preventing said fluid from going into the ink ducts of the cartridge which could deteriorate them, while maintaining control over the temperature of the solvent, the pressure of the cleaning fluid as well as that of the air participating in the cleaning and the time of the processes, depending on the type of ink, the types of heads and the degree of blockage thereof, while emitting ultrasound waves which favour decomposing the blockages.

Thus, in order to ensure airtightness, the sealed closure is sealed by means of lateral tightening, for cleaning devices for inkjet printing heads by means of a cleaning liquid, comprising:
- a basin which in turn comprises a first upper base, a first lower base and a first through slot which communicates both first bases, wherein said first through slot comprises a chamfer with respect to the first upper base.
- a tightening sheet, comprising a second upper base, a second lower base and at least one second through slot, wherein the sheet is configured to be connected to the basin by means of first connection means, the first upper base of the basin facing or being placed to face the second lower base of the sheet, and wherein the second through slot matches the first through slot of the basin; and,
- at least one O-ring, located between the first through slot of the sheet on the side of the second lower base and the chamfer of the second through slot of the basin. This O-ring is configured to take the shape of the through slots due to the capacity for elastic deformation which it possesses.

In this manner, the aforementioned components of the basin, the tightening sheet and the O-ring are attached such that the second through slot of the sheet and the first through slot of the basin are matching, meaning that the silhouettes of the slots are opposite from each other. Said slots are configured to be inserted or crossed through by the printing head in the direction perpendicular to the second upper base of the sheet.

Additionally, the first upper base of the basin and the second lower base of the sheet are configured to stick to each other or be in contact by means of the tightening of the first connection means, eliminating or reducing the clearance space comprised between both portions when the printing head is inserted into the slots.

With the printing head inserted into the through slots and with the tightening of the first connection means, the elastic deformation of the O-ring is created, said O-ring exerting a tightening force on the side walls of said printing head, on the walls of the chamfer of the basin and on the second lower base of the sheet, ensuring airtightness between the printing head and the device for cleaning heads.

The basin, with the printing head inserted, is configured to be embedded in or to rest on a vessel for containing cleaning liquid, such that the portion of the head to be cleaned is left submerged in the cleaning liquid, but not the rest of the head, which stays on the outer surface in a dry state.

In one embodiment, the O-ring has a circular cross section when it is not subjected to any type of load and the cross section thereof is modified as it is elastically deformed when the airtightness of the sealed closure is created.

In one embodiment, the chamfer of the basin has an inclination angle with respect to the first upper base comprised between 5° and 85°.

In one embodiment, the cleaning device comprises a lower cover configured to be connected by means of second connection means to the first lower base of the basin. With this cover or plate, the passage of the cleaning fluid through the printing head is solely limited to what has passed through the inlet holes of the basin, in addition to reducing the arrival of ultrasound at the printing head in order to prevent it from damaging the head.

In one embodiment, the first connection means are selected from a group consisting of screws, flanges and anchor bolts, such that they enable the sheet and the basin to be separated by a small clearance when the printing head is not inserted, still being joined, and which can eliminate or reduce said clearance when said first connection means are tightened, joining the first upper base of the basin with the second lower base of the sheet and making them come into contact.

In one embodiment, the second connection means are selected from a group consisting of screws, rivets, welding, flanges and anchor bolts, such that the joint of the cover which is joined to the basin can be permanent or removable.

### BRIEF DESCRIPTION OF THE FIGURES

To complete the description of the invention, and for the purpose of helping to make the features thereof more readily understandable, according to a preferred exemplary embodiment thereof, a set of drawings is included where, by way of illustration and not limitation, the following figures have been represented:
Figure 1 shows an exploded perspective view of the sealed closure for cleaning heads.

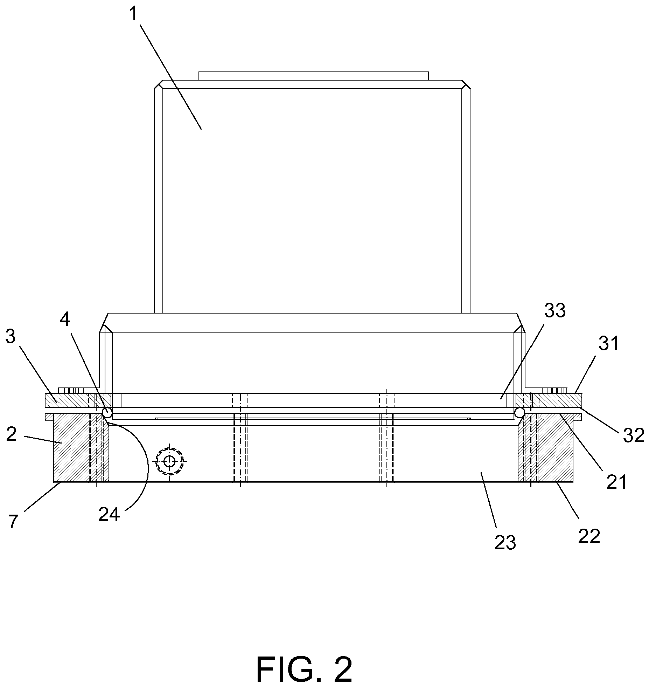

Figure 2 shows a front perspective view of the sealed closure with the printing heads inserted into the slots but without exerting force in the first connection means.

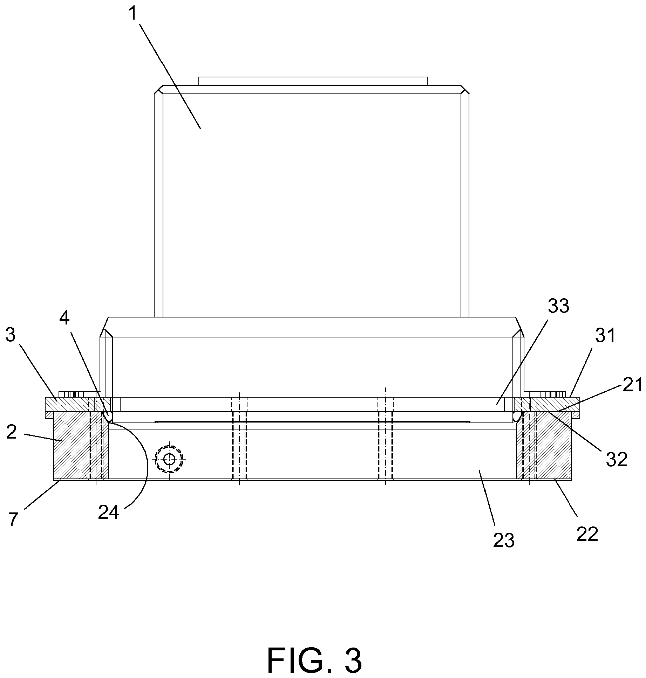

Figure 3 shows a front perspective view of the sealed closure with the printing heads inserted into the slots such that the first connection means press the sheet on the basin.

A list of the references used in the figures is provided below:
- 1: Printing head
- 2: Basin
21.- First upper base
22.- First lower base
23.- First through slot
24.- Chamfer
- 3: Plate
31.- Second upper base
32.- Second lower base
33.- Second through slot
- 4: O-ring
- 5: First connection means
- 6: Second connection means.

### DESCRIPTION OF A PREFERRED EMBODIMENT

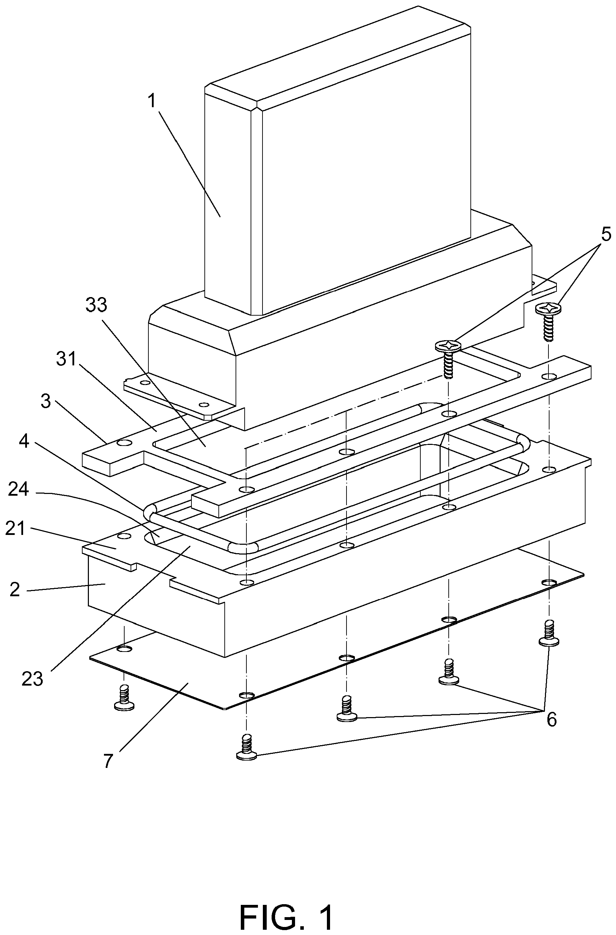

As seen in Figure 1, the invention consists of an airtight sealed closure for a device for cleaning ink printing heads (1).

This particular device comprises a flat sheet (3) made of rigid material, with a second through slot (33) centred therein, such that a second upper surface (31) and a second lower surface (32), as well as a series of through holes next to the perimeter of said sheet (3) are distinguished.

In addition to the sheet (3), the device also comprises a metal basin (2) with a rectangular cross section, with a first through slot (23) therein, with the same shape and a similar size as the second through slot (33) of the sheet (3), but said first through slot (23) comprising a chamfer (24) configured to support an O-ring (4). In the basin, there distinguished are a first upper base (21), whereon the sheet (3) rests, as seen in all the figures, a first lower base (22) configured to be connected to a lower cover (7) by means of second connection means (6) and a series of threaded holes located next to the perimeter of the basin (2).

The aforementioned O-ring (4) has a circular cross section and a rectangular shape, like the first and the second through slots (23 and 33). It is made of a plastic material with a high capacity for elastic deformation as well as for recovering the initial state thereof when the loads thereon end.

The assembly of this sheet (3) with the basin (2) and the O-ring (4) is made by first connection means (5) which, as seen in Figure 1, consist of a series of screws inserted into the perimeter holes of the sheet (3) matching the threaded holes of the basin (2) to which said screws are screwed, such that, when said screws are partially threaded into the holes of the basin (2), there is a small clearance between the sheet (3) and the basin (2), the O-ring (4) being located in that clearance, between both slots (23 and 33), in the resting state, without supporting any load that may deform it.

In order to clean the printing head, the closure being sealed with the first connection means (5) without being fully tightened, with a clearance between the sheet and the basin, must be inserted perpendicularly to the second upper base (31) into the first and second through slots (23 and 33), these being matching, such that, once said head has been inserted, the first connection means (5) are tightened, creating the elastic deformation of the O-ring (4), which is pressed against the walls of the printing head (1), the walls of the chamfer (24) and the second lower base (32) of the sheet (3), creating the airtightness of the joint of the portions.

Once the closure is completely airtight, the printing head (1) can then be cleaned, preventing the cleaning liquid, preferably some type of solvent, from leaking through ducts which can alter the operation of said head (1).

The cover (7), which is also part of the sealed closure, is connected to the first lower base (21) of the basin (2) by means of second connection means (6), such that, by means of the presence thereof, the arrival of ultrasound used to disintegrate impurities embedded in the printing head is limited, preventing said ultrasound from damaging the printing head. Furthermore, the passage of the cleaning fluid over the basin (2) is also limited with said cover.

The present invention should not be limited by the embodiment herein described. Other configurations may be carried out by those skilled in the art based on the present description. Accordingly, the scope of the invention is defined by the following claims.

## Claims

1. A sealed closure for a device for cleaning inkjet printing heads (1) by means of a cleaning liquid, which retains at least one printing head (1) to said cleaning device by means of tightening, wherein it comprises:
- a basin (2), comprising a first upper base (21), a first lower base (22), a first through slot (23) connecting both first bases (21-22), wherein said first through slot (23) comprises a chamfer (24) with respect to the first upper base (21);
- a tightening sheet (3) comprising a second upper base (31), a second lower base (32) and at least one second through slot (33), wherein the sheet (3) is configured to be attached to the basin (2) by means of first connection means (5), the first upper base (21) of the basin (2) facing the second lower base (32) of the sheet (3), and wherein the second through slot (33) matches the first through slot (23) of the basin (2); and,
- at least one O-ring (4), located between the first through slot (33) of the sheet (3) and the chamfer (24) of the second through slot (23) of the basin (2), configured to take the shape of the through slots (23 and 33);
wherein, since the second through slot (33) of the sheet (3) and the first through slot (23) of the basin (2) are matching, they are configured to be inserted through the printing head (1) in a manner perpendicular to the second upper base (31) of the sheet (3); and
wherein the first upper base (21) of the basin (2) and the second lower base (32) of the sheet (3) are configured to stick to each other by means of the tightening of the first connection means (5); and
wherein the insertion of the printing head (1) into the through slots (23 and 33) and the tightening of the first connection means (5) create the elastic deformation of the O-ring (4), said O-ring (4) exerting a tightening force on the side walls of said printing head, on the walls of the chamfer (24) of the basin (2) and on the second lower base (32) of the sheet (3), ensuring airtightness between the printing head (1) and the device for cleaning heads.

2. The sealed closure for a device for cleaning printing heads (1) according to claim 1, wherein the O-ring (4) has a circular cross section when it is not subjected to any type of load.

3. The sealed closure for a device for cleaning printing heads (1) according to claim 1, wherein the chamfer (24) of the basin (2) has an inclination angle with respect to the first upper base (21) comprised between 5° and 85°.

4. The sealed closure for a device for cleaning printing heads (1) according to claim 1, wherein the cleaning device comprises a lower cover (7) configured to be connected by means of second connection means (6) to the first lower base (22) of the basin (2).

5. The sealed closure for a device for cleaning printing heads (1) according to claim 1, wherein the first connection means (5) are selected from a group consisting of screws, flanges and anchor bolts.

6. The sealed closure for a device for cleaning printing heads (1) according to claim 4, wherein the second connection means (6) are selected from a group consisting of screws, rivets, welding, flanges and anchor bolts.

## Patentansprüche

1. Abgedichteter Verschluss für eine Reinigungsvorrichtung von Tintenstrahldruckköpfen (1) mittels einer Reinigungsflüssigkeit, der wenigstens einen Druckkopf (1) durch Festziehen an der Reinigungsvorrichtung hält, wobei er umfasst:
- einen Behälter (2), umfassend eine erste obere Basis (21), eine erste untere Basis (22), einen ersten Durchgangsschlitz (23), der beide ersten Basen (21-22) verbindet, wobei der erste Durchgangsschlitz (23) eine Fase (24) in Bezug auf die erste obere Basis (21) umfasst;
- eine Spannplatte (3), umfassend eine zweite obere Basis (31), eine zweite untere Basis (32) und wenigstens einen zweiten Durchgangsschlitz (33), wobei die Platte (3) dazu eingerichtet ist, an dem Behälter (2) durch erste Verbindungseinrichtungen (5) angebracht zu werden, wobei die erste obere Basis (21) des Behälters (2) der zweiten unteren Basis (32) der Platte (3) zugewandt ist und der zweite Durchgangsschlitz (33) mit dem ersten Durchgangsschlitz (23) des Behälters (2) übereinstimmt; und
- wenigstens einen O-Ring (4), der sich zwischen dem ersten Durchgangsschlitz (33) der Platte (3) und der Fase (24) des zweiten Durchgangsschlitzes (23) des Behälters (2) befindet und dazu eingerichtet ist, die Form der Durchgangsschlitze (23 und 33) anzunehmen;
wobei, da der zweite Durchgangsschlitz (33) der Platte (3) und der erste Durchgangsschlitz (23) des Behälters (2) übereinstimmen, diese dazu eingerichtet sind, durch den Druckkopf (1) senkrecht zu der zweiten oberen Basis (31) der Platte (3) eingeführt zu werden; und
die erste obere Basis (21) des Behälters (2) und die zweite untere Basis (32) der Platte (3) dazu eingerichtet sind, durch Festzeihen der ersten Verbindungseinrichtungen (5) aneinander zu haften; und
das Einführen des Druckkopfes (1) in die Durchgangsschlitze (23 und 33) und das Festziehen der ersten Verbindungseinrichtungen (5) die elastische Verformung des O-Rings (4) bewirken, wobei der O-Ring (4) eine Feststellkraft auf die Seitenwände des Druckkopfes, auf die Wände der Fase (24) des Behälters (2) und auf die zweite untere Basis (32) der Platte (3) ausübt, um die Luftdichtheit zwischen dem Druckkopf (1) und der Reinigungsvorrichtung für Druckköpfe sicherzustellen.

2. Abgedichteter Verschluss für eine Reinigungsvorrichtung von Druckköpfen (1) nach Anspruch 1, bei dem der O-Ring (4) einen kreisförmigen Querschnitt aufweist, wenn er keiner Art von Belastung ausgesetzt ist.

3. Abgedichteter Verschluss für eine Reinigungsvorrichtung von Druckköpfen (1) nach Anspruch 1, bei dem die Fase (24) des Behälters (2) einen Neigungswinkel gegenüber der ersten oberen Basis (21) aufweist, der zwischen 5° und 85° liegt.

4. Abgedichteter Verschluss für eine Reinigungsvorrichtung von Druckköpfen (1) nach Anspruch 1, wobei die Reinigungsvorrichtung eine untere Abdeckung (7) umfasst, die dazu eingerichtet ist, durch zweite Verbindungseinrichtungen (6) mit der ersten unteren Basis (22) des Behälters (2) verbunden zu werden.

5. Abgedichteter Verschluss für eine Reinigungsvorrichtung von Druckköpfen (1) nach Anspruch 1, bei dem die ersten Verbindungseinrichtungen (5) aus einer Gruppe ausgewählt sind, die aus Schrauben, Flanschen und Ankerbolzen besteht.

6. Abgedichteter Verschluss für eine Reinigungsvorrichtung von Druckköpfen (1) nach Anspruch 4, bei dem die zweiten Verbindungseinrichtungen (6) aus einer Gruppe ausgewählt sind, die aus Schrauben, Nieten, Schweißen, Flanschen und Ankerbolzen besteht.

## Revendications

1. Fermeture étanche pour un dispositif de nettoyage de têtes d'impression à jet d'encre (1) au moyen d'un liquide nettoyant, qui retient au moins une tête d'impression (1) audit dispositif de nettoyage au moyen de serrage, dans laquelle elle comprend :
- une cuvette (2), comprenant une première base supérieure (21), une première base inférieure (22), une première fente traversante (23) connectant les deux premières bases (21-22), dans laquelle ladite fente traversante (23) comprend un chanfrein (24) par rapport à la première base supérieure (21) ;
- une feuille de serrage (3) comprenant une seconde base supérieure (31), une seconde base inférieure (32) et au moins une seconde fente traversante (33), dans laquelle la feuille (3) est configurée pour être fixée à la cuvette (2) au moyen d'un premier moyen de connexion (5), la première base supérieure (21) de la cuvette (2) faisant face à la seconde base inférieure (32) de la feuille (3), et dans laquelle la seconde fente traversante (33) s'apparie à la première fente traversante (23) de la cuvette (2) ; et
- au moins un joint-O (4), disposé entre la première fente traversante (33) de la feuille (3) et le chanfrein (24) de la seconde fente traversante (23) de la cuvette (2), configuré pour prendre la forme des fentes traversantes (23 et 33) ;
dans laquelle, comme la première fente traversante (33) de la feuille (3) et la première fente traversante (23) de la cuvette (2) s'apparient, elles sont configurées pour être insérées à travers la tête d'impression (1) de manière perpendiculaire à la seconde base supérieure (31) de la feuille (3) ; et
dans laquelle la première base supérieure (21) de la cuvette (2) et la seconde base inférieure (32) de la feuille (3) sont configurées pour coller l'une à l'autre au moyen du serrage du premier moyen de connexion (5) ; et
dans laquelle l'insertion de la tête d'impression (1) dans les fentes traversantes (23 et 33) et le serrage du premier moyen de connexion (5) créent la déformation élastique du joint-O (4), ledit joint-O (4) exerçant une force de serrage sur les parois latérales de ladite tête d'impression, sur les parois du chanfrein (24) de la cuvette (2) et sur la seconde base inférieure (32) de la feuille (3), assurant une étanchéité à l'air entre la tête d'impression (1) et le dispositif de nettoyage des têtes.

2. Fermeture étanche pour un dispositif de nettoyage de têtes d'impression (1) selon la revendication 1, dans laquelle le joint-O (4) présente une section transversale circulaire lorsqu'il n'est pas soumis à un type de charge.

3. Fermeture étanche pour un dispositif de nettoyage de têtes d'impression (1) selon la revendication 1, dans laquelle le chanfrein (24) de la cuvette (2) présente un angle d'inclinaison par rapport à la première base supérieure (21) compris de 5° à 85°.

4. Fermeture étanche pour un dispositif de nettoyage de têtes d'impression (1) selon la revendication 1, dans laquelle le dispositif de nettoyage comprend une couverture inférieure (7) configurée pour être connectée au moyen de second moyen de connexion (6) à la première base inférieure (22) de la cuvette (2).

5. Fermeture étanche pour un dispositif de nettoyage de têtes d'impression (1) selon la revendication 1, dans laquelle le premier moyen de connexion (5) est choisi dans un groupe consistant en vis, brides et boulons d'ancrage.

6. Fermeture étanche pour un dispositif de nettoyage de têtes d'impression (1) selon la revendication 4, dans laquelle le second moyen de connexion (6) est choisi dans un groupe consistant en vis, rivets, soudure, brides et boulons d'ancrage.
